# EUROPEAN PATENT APPLICATION

(11) **EP 3 373 425 A1**
(43) Date of publication of application: **12.09.2018**
(21) Application number: 16861888.2
(22) Date of filing: 11.10.2016
(51) Int. Cl.: H02K 15/02, H01F 41/02, H02K 1/22, H02K 1/27

(54) **METHOD FOR MANUFACTURING LAMINATED CORE**

(30) Priority: 05.11.2015 JP 2015217507
(71) Applicant: Mitsui High-Tec, Inc., Kitakyushu-shi, Fukuoka 807-8588 (JP)
(72) Inventor: HASHIMOTO Akihiro, Kitakyushu-shi Fukuoka 807-8588 (JP)
(74) Representative: Vossius & Partner Patentanwälte Rechtsanwälte mbB
(86) International application number: PCT/JP2016/080134
(87) International publication number: WO 2017/077821

(57) **Abstract**

The present disclosure relates to a method for manufacturing a laminated core. This method includes (A) a step in which a plate to be processed is supplied to a die, (B) a step in which a processed body having an annular portion, a plurality of magnet-accommodating regions aligned at predetermined intervals in a circumferential direction at a periphery of the annular portion, and a main body part serving as a magnetic flux passage is obtained by punching by means of the die, and (C) a step in which a laminated core is obtained by a plurality of the processed bodies being stacked and fastened. The (B) step includes (b-1) a step in which a first-removal region is formed in the magnet-accommodating region and (b-2) a step in which a second-removal region is formed in the magnet-accommodating region after the (b-1) step.

## Description

### Technical Field

The present disclosure relates to a method for manufacturing a laminated core constituting a rotor.

### Background Art

A laminated core is a part of a motor. The laminated core is formed by a plurality of electromagnetic steel sheets (processed bodies) processed into a predetermined shape being stacked and fastened. The motor is provided with a rotor and a stator, each of which includes the laminated core, and is completed through a step in which a shaft is attached to the rotor, a step in which a coil is wound around the stator, and so on. The laminated core constituting the rotor has a plurality of poles. Each of the poles has one or a plurality of permanent magnets. The permanent magnets are accommodated in a magnet-accommodating region (slot) of the laminated core. The motor that has the rotor which has this configuration is referred to as an interior permanent magnet (IPM) motor.

Known as a rotor including a laminated core provided with a magnet-accommodating region is a rotor in which a plurality of magnet-accommodating regions is arranged in a circumferential direction at predetermined intervals and a processed body in which a fan-shaped main body part is formed between the magnet-accommodating regions that are next to each other is laminated (see, for example, Patent Literature 1). Known as a method for manufacturing a laminated core constituting a rotor is a method including a step in which an electromagnetic steel sheet (plate to be processed) is supplied to a progressive die, a step in which a processed body having a predetermined shape is produced by punching in the progressive die, and a step in which a laminated core is obtained by a plurality of the produced processed bodies being stacked (see, for example, Patent Literature 2).

### Citation List

### Patent Literature

Patent Literature 1: Japanese Unexamined Patent Publication No. 2001-37121
Patent Literature 2: Japanese Unexamined Patent Publication No. 2003-211238

### Summary of Invention

### Technical Problem

In a case where the processed body is obtained by the punching that is disclosed in Patent Literature 2, the residual stress in the processed body based on a punching load poses a problem. The residual stress in the processed body may cause the laminated core to be deformed. In a case where the processed body in which the plurality of magnet-accommodating regions is arranged in the circumferential direction as disclosed in Patent Literature 1 is obtained by punching, an increase in punching region is likely to result in an increase in punching load. As a result, in the laminated core including the processed body in which the plurality of magnet-accommodating regions is arranged as disclosed in Patent Literature 1, deformation attributable to residual stress based on a punching load is likely to occur.

The present disclosure has been made in view of the above-described circumstances, and an object thereof is to suppress deformation attributable to residual stress in a laminated core of a rotor that is a laminated body of processed bodies in which a plurality of magnet-accommodating regions is arranged.

### Solution to Problem

A method for manufacturing a laminated core according to an aspect of the present disclosure includes (A) a step in which a plate to be processed is supplied to a die, (B) a step in which a processed body having an annular portion, a plurality of magnet-accommodating regions aligned at predetermined intervals in a circumferential direction at a periphery of the annular portion, and a main body part serving as a magnetic flux passage between the plurality of magnet-accommodating regions is obtained by punching in the plate to be processed by means of the die, and (C) a step in which a laminated core is obtained by a plurality of the processed bodies being stacked and fastened, in which the (B) step includes (b-1) a step in which a first-removal region formed in advance is formed in the magnet-accommodating region, and (b-2) a step in which a second-removal region formed continuous to the first-removal region is formed in the magnet-accommodating region after the (b-1) step.

By the method for manufacturing a laminated core, the second-removal region is formed after the first-removal region is formed during the formation of the plurality of magnet-accommodating regions by punching. In other words, the magnet-accommodating regions are formed through a plurality of divided steps. As a result, the punching load that is applied to the plate to be processed during the formation of the magnet-accommodating regions is reduced in comparison to a case where magnet-accommodating regions are collectively formed. Accordingly, the residual stress of the processed body obtained after punching can be reduced and deformation of the laminated core in which the processed body is laminated can be suppressed.

The second-removal region may be formed in the (b-2) step such that the second-removal region partially overlaps the first-removal region. In a case where the punching accuracy of the die is reduced due to a decline in the supply position accuracy of the plate to be processed with respect to the die and a decline in the assembly accuracy of the die, the first-removal region and the second-removal region do not form continuous punching regions, and then burr generation and incomplete cutting may pose a problem. The first-removal region and the second-removal region partially overlap each other in this regard, and thus the first-removal region and the second-removal region are likely to form continuous regions and burr generation and so on can be suppressed even in a case where the punching accuracy is reduced.

The first-removal region may be formed in the (b-1) step such that a notch is formed in a side of the adjacent main body part in a region of the first-removal region overlapping the second-removal region. By the notch being formed at the main body part, the region in which the first-removal region and the second-removal region overlap each other can be widened. As a result, the first-removal region and the second-removal region not forming continuous punching regions can be further reliably avoided and burr generation and so on can be more appropriately suppressed in a case where the punching accuracy is reduced.

A region of the magnet-accommodating region on a radial-direction inner side continuous to the annular portion may be formed as the first-removal region in the (b-1) step and a region closer to a radial-direction outer side of the magnet-accommodating region than the first-removal region may be formed as the second-removal region in the (b-2) step. In this manner, continuous punching by a progressive die can be performed.

A connecting part extending from the annular portion toward the main body part and narrower in width in the circumferential direction than the main body part may be formed in the (B) step, the (B) step may further include (b-0) a step in which a preliminary-removal region as a peripheral region of a region becoming the connecting part is formed in the magnet-accommodating region prior to the first-removal region, and the first-removal region including the preliminary-removal region may be formed in the (b-1) step. In the processed body, the connecting part narrow in circumferential-direction width is formed from the annular portion toward the main body part. The small-region part is weak in strength, and thus is likely to be deformed by the residual stress based on the punching load. In this regard, the preliminary-removal region, which is the peripheral region of the region becoming the connecting part, is formed before the formation of the first-removal region including the preliminary-removal region, and thus the punching region in the vicinity of the region becoming the connecting part can become small (that is, the punching load can be reduced). As a result, the residual stress remaining in the connecting part is reduced and deformation of the connecting part, which is weak in strength, can be suppressed.

The first-removal region may be formed in the (b-1) step such that the preliminary-removal region is included inside the first-removal region without exception. By the preliminary-removal regions being completely included in the first-removal region, the first-removal region and the second-removal region not forming continuous punching regions can be further reliably avoided. As a result, burr generation and so on can be effectively suppressed.

The preliminary-removal regions of the plurality of magnet-accommodating regions may be collectively formed in the (b-0) step, the first-removal regions of the plurality of magnet-accommodating regions may be formed through a plurality of divided occasions in the (b-1) step, and the second-removal regions of the plurality of magnet-accommodating regions may be collectively formed in the (b-2) step. Preferably, the formation of the magnet-accommodating region by punching is performed through as few steps as possible in view of work efficiency. Still, in a case where the punching region is large and the region in the vicinity of the punching place is small, the burden on the die during punching increases, and thus the number of punching steps needs to be reduced in view of the burden on the die. In this regard, by the above method for manufacturing, the first-removal region including the preliminary-removal region close to the connecting part, that is, the region larger in punching region than the preliminary-removal region and close to the small-region connecting part is formed through a plurality of divided occasions while the preliminary-removal region and the second-removal region are collectively formed. As a result, the step in which an increase in the burden on the die during punching is evident can be divided into a plurality of steps, and the burden on the die can be reduced and the number of steps relating to the formation of the magnet-accommodating region can be kept to a minimum at the same time.

### Advantageous Effects of Invention

According to the present disclosure, deformation attributable to residual stress can be suppressed in a laminated core of a rotor that is a laminated body of processed bodies in which a plurality of magnet-accommodating regions is arranged.

### Brief Description of Drawings

FIG. 1 is a perspective view illustrating an example of a laminated core constituting a rotor.
FIG. 2 is a plan view illustrating a processed body included in the laminated core illustrated in FIG. 1.
FIG. 3 is a schematic diagram illustrating an example of a punching device.
FIGS. 4(a) to 4(f) are a plan view of the layout of punching as a whole.
FIGS. 5(a) and 5(b) are enlarged plan views of the layouts illustrated in FIGS. 4(a) and 4(b), respectively.
FIGS. 6(a) and 6(b) are enlarged plan views of the layouts illustrated in FIGS. 4(c) and 4(d), respectively.
FIGS. 7(a) and 7(b) are enlarged plan views of the layouts illustrated in FIGS. 4(e) and 4(f), respectively.
FIG. 8 is an explanatory diagram for describing each punching region.
FIG. 9 is an enlarged view of the region OE that is illustrated in FIG. 8.

### Description of Embodiments

Hereinafter, an embodiment of the present disclosure will be described in detail with reference to accompanying drawings. In the following description, the same reference numerals will be used to refer to the same elements or elements that have the same functions so that a duplicate description is omitted.

### <Laminated Core and Processed Body>

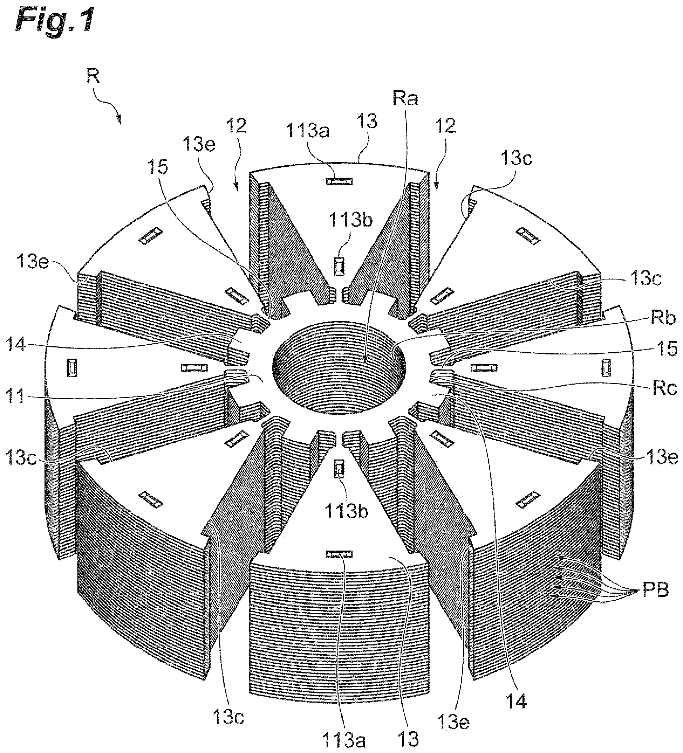

FIG. 1 is a perspective view of a laminated core R constituting a rotor. The laminated core R has a substantially cylindrical shape, and an opening Ra positioned in a middle portion is for a shaft (not illustrated) to be mounted. A projecting key (not illustrated) may be disposed, as a configuration for the mounting of the shaft, on an inner peripheral surface Rb constituting the opening Ra.

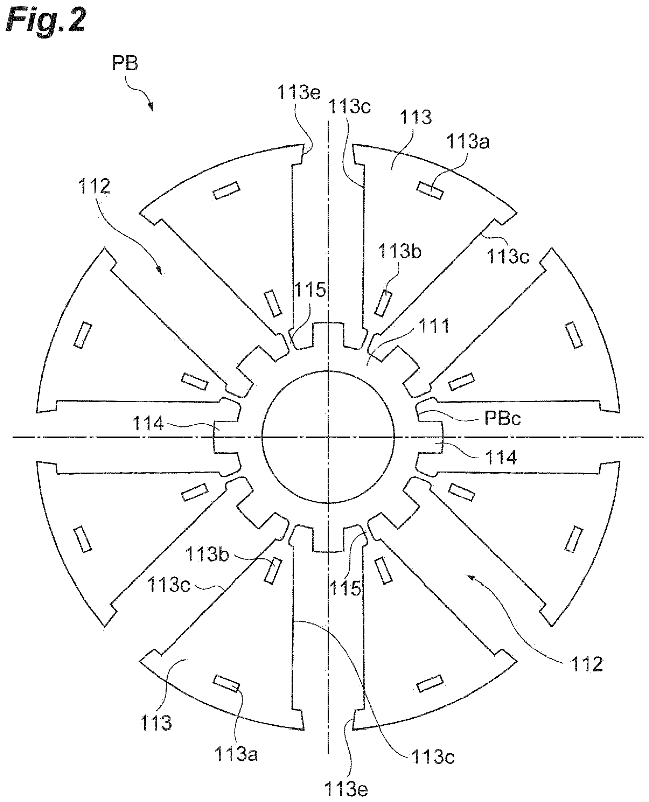

The laminated core R is configured by a plurality of processed bodies PB (refer to FIG. 2) being laminated. FIG. 2 is a plan view illustrating the processed body PB included in the laminated core R illustrated in FIG. 1. The processed body PB is obtained from an electromagnetic steel sheet (plate to be processed) by punching by means of a die (described later). The processed body PB is provided with a ring-shaped annular portion 111, a plurality of magnet-accommodating regions 112 aligned at predetermined intervals in a circumferential direction at the periphery of the annular portion 111, and a main body part 113 serving as a magnetic flux passage between the plurality of magnet-accommodating regions 112.

The processed body PB is provided with a projecting part 114 extending from an outer peripheral surface PBc of the annular portion 111 toward the magnet-accommodating region 112 and a connecting part 115 extending from the outer peripheral surface PBc toward the main body part 113. The connecting part 115 connects the annular portion 111 and the main body part 113 to each other and is narrower in circumferential-direction width than the main body part 113.

The main body part 113 is formed in a substantially fan shape in plan view. The main body part 113 has joining portions 113a and 113b on a radial-direction outer side and a radial-direction inner side. The laminated core R is configured by the processed bodies PB that overlap each other in an up-down direction being fastened to each other by caulking in the joining portions 113a and 113b. In other words, each processed body PB has the joining portions 113a and 113b forming a recessed portion on the surface and forming a projecting portion on the back. The upper and lower processed bodies are fastened by fitting of the back (projecting portion) of the processed body PB on the upper side and the surface (recessed portion) of the processed body PB on the lower side. The joining portions 113a and 113b of the processed body PB that is positioned in the lowermost portion of the laminated body are not projecting and recessed portions but perforations so that a plurality of the laminated cores R is not fastened to each other.

The processed bodies PB may be fastened by any method although the laminated core R is configured by the processed bodies PB being stacked and fastened by caulking (joining portions 113a and 113b) according to the above description. For example, the plurality of processed bodies PB may be fastened to each other by welding, adhesion, or a resin material. In the related art, caulking and welding are widely adopted in view of cost and work efficiency. In a case where priority is given to high torque and low iron loss of a motor, a resin material or an adhesive may be adopted instead of caulking and welding. In addition, the laminated core R may also be obtained by temporary caulking being provided for the processed bodies PB, the processed bodies PB being fastened to each other as a result, and then the temporary caulking being removed from the laminated body. The "temporary caulking" means caulking that is used for a plurality of processed bodies manufactured by punching to be temporarily integrated and removed during product (laminated core) manufacturing.

An outer collar 113e protruding to the adjacent magnet-accommodating region 112 side is disposed on the radial-direction outer side of the main body part 113.

The laminated core R illustrated in FIG. 1 is configured by the processed body PB described above being laminated. The laminated core R is provided with a cylindrical portion 11 surrounding the shaft (rotary shaft), a plurality of magnet-accommodating spaces 12 formed at predetermined intervals in the circumferential direction on the radial-direction outer side of the cylindrical portion 11, and a main body portion 13 serving as a magnetic flux passage formed between the plurality of magnet-accommodating spaces 12. The magnet-accommodating space 12 is a space for accommodating at least one permanent magnet (for example, a bonded magnet or a sintered magnet such as a neodymium magnet) and a space between side surfaces 13c of the two main body portions 13 that are adjacent to each other. The cylindrical portion 11, the magnet-accommodating space 12, and the main body portion 13 are formed by the annular portion 111, the magnet-accommodating region 112, and the main body part 113 of the processed body PB being laminated, respectively.

An outer collar portion 13e protruding to the adjacent magnet-accommodating space 12 side is disposed, from the upper surface to the lower surface of the main body portion 13, on the radial-direction outer side of the main body portion 13. An appropriate size and an appropriate shape are determined for the outer collar portion 13e for appropriate fixing of the magnet (not illustrated) in the magnet-accommodating space 12, magnetic flux leakage reduction, and so on. The outer collar portion 13e is formed by the outer collar 113e of the processed body PB being laminated.

The laminated core R is provided with a projecting portion 14 extending from an outer peripheral surface Rc of the cylindrical portion 11 toward the magnet-accommodating space 12 and a connecting portion 15 extending from the outer peripheral surface Rc toward the main body portion 13. The projecting portion 14 and the connecting portion 15 are formed by the projecting part 114 and the connecting part 115 of the processed body PB being laminated.

### <Punching Device>

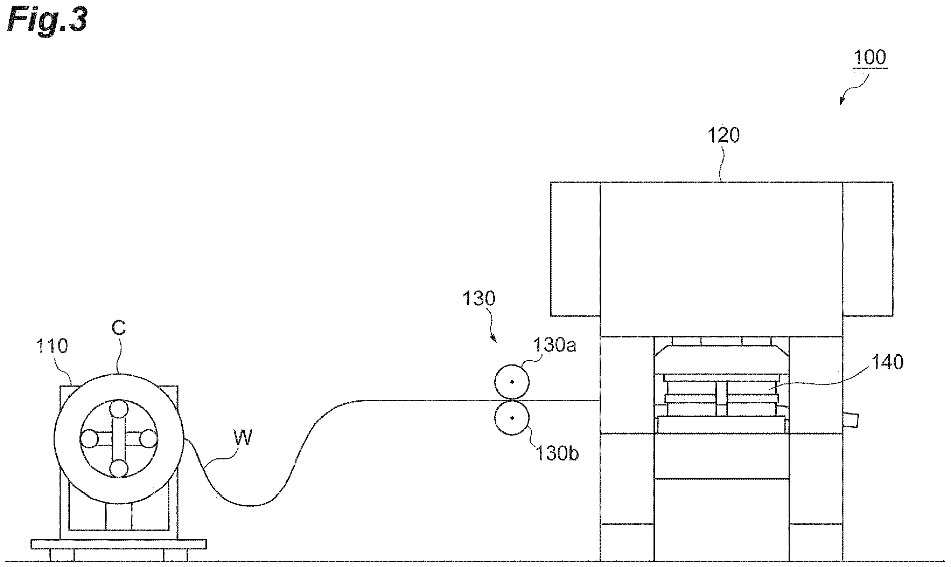

FIG. 3 is an outline drawing illustrating an example of a punching device manufacturing the processed body PB constituting the laminated core R by punching. A punching device 100 illustrated in the drawing is provided with an uncoiler 110 on which a winding body C is mounted, a feeding device 130 for an electromagnetic steel sheet (hereinafter, referred to as a "plate to be processed W") drawn out from the winding body C, a progressive die 140 (die) performing punching with respect to the plate to be processed W, and a press machine 120 operating the progressive die 140.

The uncoiler 110 rotatably holds the winding body C. The length of the plate to be processed W constituting the winding body C is, for example, 500 m to 10,000 m. The thickness of the plate to be processed W constituting the winding body C may be approximately 0.1 mm to 0.5 mm and, for the laminated core R to achieve more excellent magnetic properties, may be approximately 0.1 mm to 0.3 mm. The width of the plate to be processed W may be approximately 50 mm to 500 mm.

The feeding device 130 has a pair of rollers 130a and 130b pinching the plate to be processed W from above and below. The plate to be processed W is introduced into the progressive die 140 via the feeding device 130. The progressive die 140 is to continuously perform punching, bending, cutting and bending, push-back, and so on with respect to the plate to be processed W.

### <Method for Manufacturing Laminated Core>

A method for manufacturing the laminated core R will be described below. The laminated core R is manufactured through a process in which the processed body PB is manufactured (step (A) and step (B) below) and a process in which the laminated core R is manufactured from the plurality of processed bodies PB (step (C) below). More specifically, the method for manufacturing the laminated core R is provided with the following steps.
(A) Step in which the plate to be processed W is supplied to the progressive die 140
(B) Step in which the processed body PB having the annular portion 111, the plurality of magnet-accommodating regions 112 aligned at predetermined intervals in the circumferential direction at the periphery of the annular portion 111, and the main body part 113 serving as the magnetic flux passage between the plurality of magnet-accommodating regions 112 is obtained by punching in the plate to be processed W by means of the progressive die 140
(C) Step in which the laminated core R is obtained by the plurality of processed bodies PB being stacked and fastened

Firstly, the winding body C for the electromagnetic steel sheet is prepared and mounted on the uncoiler 110. The electromagnetic steel sheet (plate to be processed W) drawn out from the winding body C is supplied to the progressive die 140 (step (A)).

The processed body PB having the annular portion 111, the magnet-accommodating region 112, and the main body part 113 is continuously manufactured by punching in the plate to be processed W in the progressive die 140 (step (B)). In other words, in step (B), the processed body PB is obtained by a punch of the progressive die 140 performing punching on the plate to be processed W. In step (B) of the present embodiment, the following sequential steps are included as steps in which the magnet-accommodating region 112 is formed.
(b-0) Step in which a preliminary-removal region 112a is formed in the magnet-accommodating region 112, the preliminary-removal region 112a being a peripheral region of the region corresponding to the connecting part 115 (region becoming the connecting part 115 in the processed body PB)
(b-1) Step in which a first-removal region 112b is formed in the magnet-accommodating region 112
(b-2) Step in which a second-removal region 112c is formed in the magnet-accommodating region 112

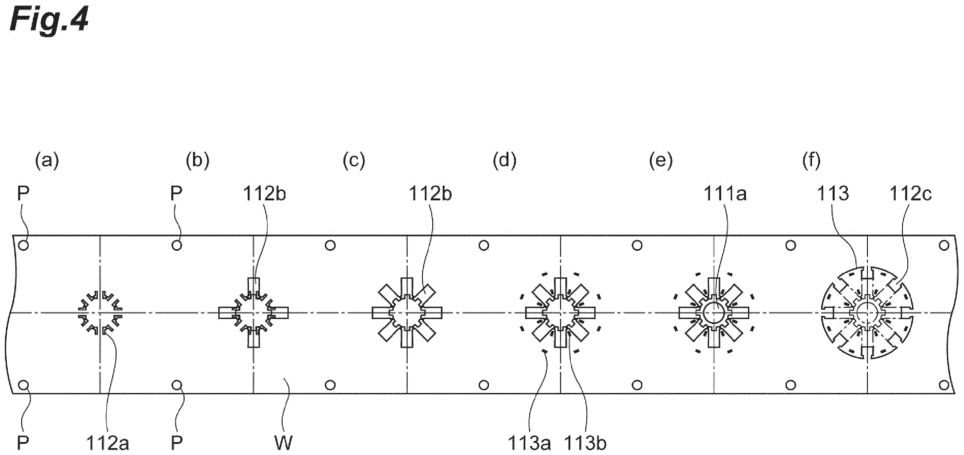

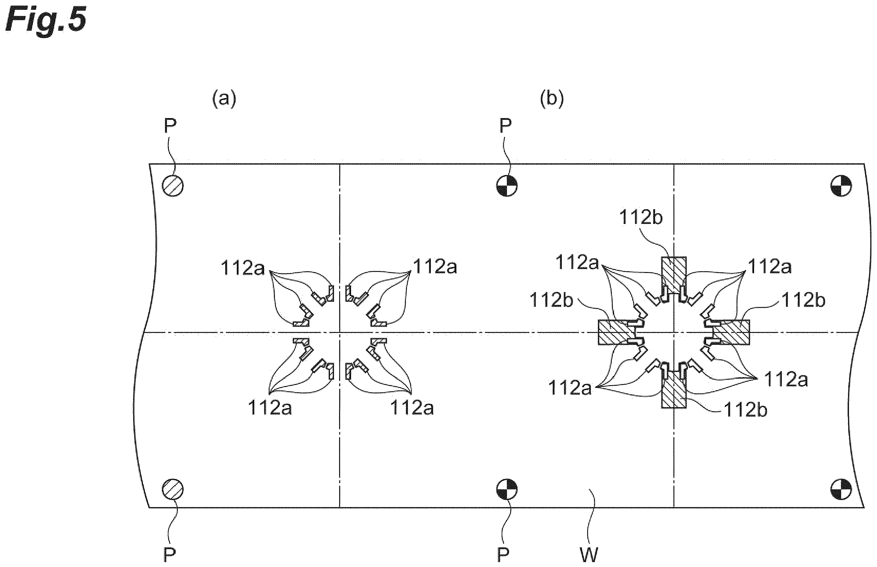

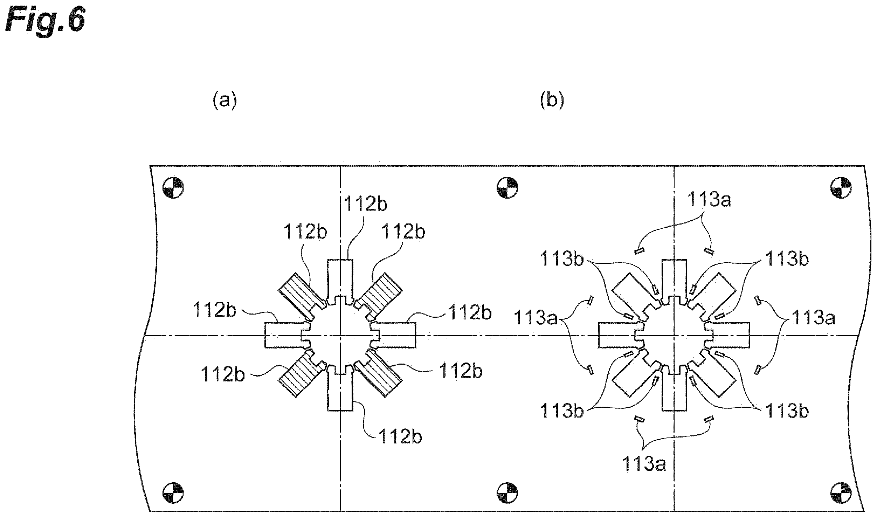

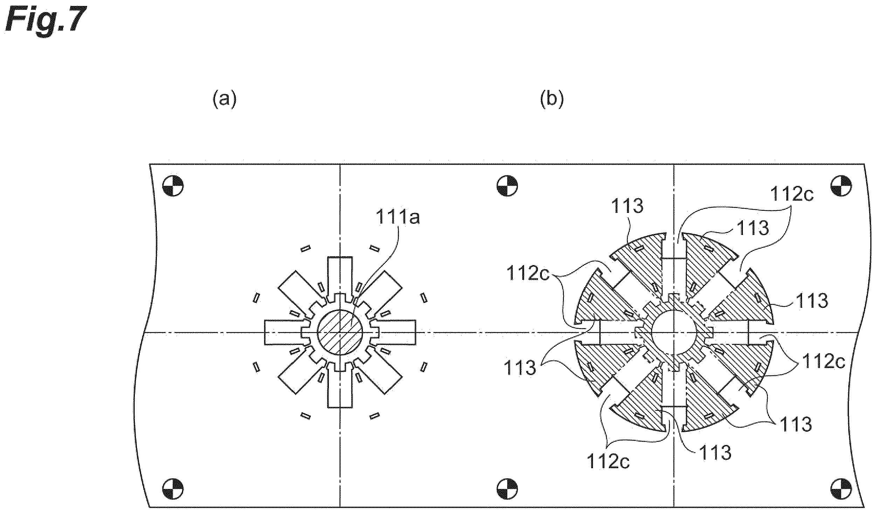

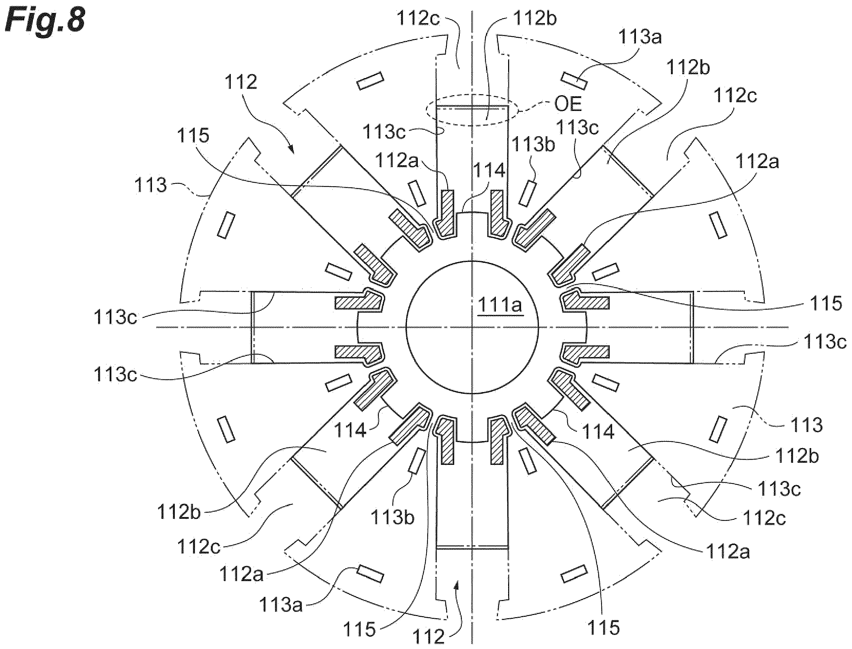

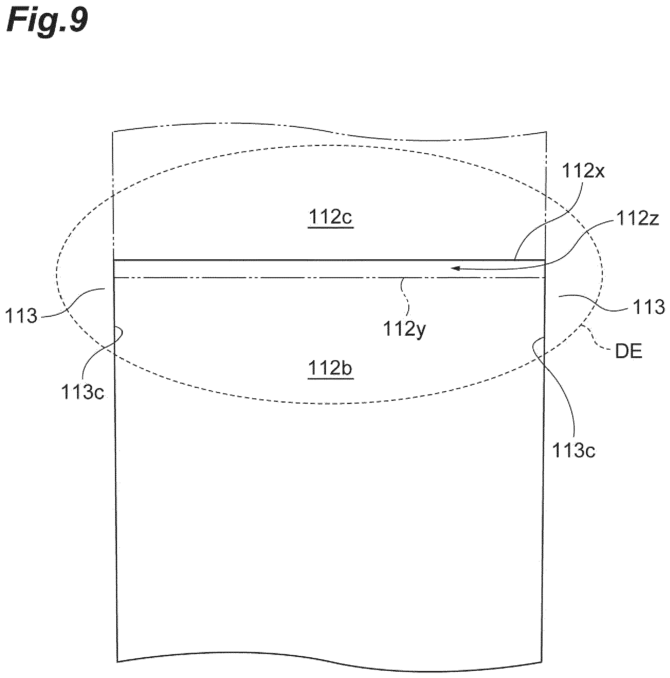

Step (B) will be described with reference to FIGS. 4 to 9. FIGS. 4(a) to 4(f) are a plan view of the layout of the punching as a whole. FIGS. 5(a) and 5(b) are enlarged plan views of the layouts illustrated in FIGS. 4(a) and 4(b), respectively. FIGS. 6(a) and 6(b) are enlarged plan views of the layouts illustrated in FIGS. 4(c) and 4(d), respectively. FIGS. 7(a) and 7(b) are enlarged plan views of the layouts illustrated in FIGS. 4(e) and 4(f), respectively. FIG. 8 is a diagram for describing each punching region. In FIG 8, the punching region relating to the preliminary-removal region 112a in the magnet-accommodating region 112 is indicated by hatching, the punching region relating to the first-removal region 112b in the magnet-accommodating region 112 is indicated by a solid line, and the punching region relating to the second-removal region 112c in the magnet-accommodating region 112 is indicated by a two-dot chain line. FIG. 9 is an enlarged view of the region OE that is illustrated in FIG. 8. The layout of the punching is not limited to that illustrated in FIG. 4, and a step for press load balancing may also be added. For example, a step for temporary caulking formation may also be added.

Step B1 (step (b-0)) is a step in which the preliminary-removal region 112a is formed with respect to the plate to be processed W in which a pilot hole P is formed (refer to FIGS. 4(a) and 5(a)). The pilot hole P is to perform positioning of the plate to be processed W in the progressive die 140. In step B1, a total of 16 preliminary-removal regions 112a are formed, two for each of the eight magnet-accommodating regions 112. In step B1, the 16 preliminary-removal regions 112a of the eight magnet-accommodating regions 112 are collectively formed.

The preliminary-removal region 112a in the magnet-accommodating region 112 is formed in the peripheral region of the region becoming the connecting part 115 of the processed body PB (refer to FIG. 8). For example, the preliminary-removal region 112a is formed in the region in the magnet-accommodating region 112 that is next to the connecting part 115 in the circumferential direction and partitioned by the connecting part 115 and the projecting part 114. The preliminary-removal region 112a may also be formed not only in the region partitioned by the connecting part 115 and the projecting part 114 but also up to the region that is closer to the radial-direction outer side than the projecting part 114 as illustrated in FIG. 8. The preliminary-removal region 112a may be small to the extent that the punching load applied to the connecting part 115 does not become excessively large.

Step B2 (step (b-1)) and step B3 (step (b-1)) are steps in which the first-removal region 112b formed prior to the second-removal region 112c (described later) is formed in the magnet-accommodating region 112 (refer to FIGS. 4(b), 4(c), 5(b), and 6(a)). In step B2, the first-removal regions 112b of the four magnet-accommodating regions 112 that are not next to each other in the circumferential direction among the eight magnet-accommodating regions 112 are formed. Subsequently, the first-removal regions 112b of the remaining four magnet-accommodating regions 112 are formed in step B3, which is performed after step B2. In the steps in which the first-removal regions 112b are formed, the first-removal regions 112b of the plurality of magnet-accommodating regions 112 are formed through a plurality of divided occasions as described above. In other words, in the present embodiment, the first-removal regions 112b next to each other in the circumferential direction are not formed at the same time in the steps in which the first-removal regions 112b are formed.

In step B2 and step B3, the first-removal regions 112b including the two preliminary-removal regions 112a of the same magnet-accommodating region 112 formed in step B1 are formed. More specifically, in step B2 and step B3, the first-removal regions 112b are formed such that the two preliminary-removal regions 112a of the same magnet-accommodating region 112 are included inside the first-removal region 112b without exception (refer to FIG. 8).

In step B2 and step B3, the region of the magnet-accommodating region 112 on the radial-direction inner side that is continuous to the region becoming the annular portion 111 is formed as the first-removal region 112b. For example, the first-removal region 112b is the region of the magnet-accommodating region 112 on the radial-direction inner side that accounts for at least half of the size of the entire magnet-accommodating region 112 (refer to FIG. 8).

Step B4 is a step in which the recessed portions (projecting portions when seen from the back) or the perforations are formed at the positions in the processed body PB that correspond to the joining portions 113a and 113b of the main body part 113 (refer to FIGS. 4(d) and 6(b)). In other words, in step B4, the recessed portions are formed at the positions corresponding to the joining portions 113a and 113b by bending in a case where the processed body PB other than the processed body PB positioned in the lowermost portion of the laminated core R is manufactured and the perforations are formed at the positions corresponding to the joining portions 113a and 113b by punching in a case where the processed body PB positioned in the lowermost portion of the laminated core R is manufactured.

Step B5 is a step in which a central region 111a is formed by punching being performed inside the annular portion 111 (refer to FIGS. 4(e) and 7(a)).

Step B6 (step (b-2)) is a step in which the second-removal region 112c formed continuous to the first-removal region 112b is formed in the magnet-accommodating region 112 (refer to FIGS. 4(f) and 7(b)). In step B6, the second-removal regions 112c of the plurality of magnet-accommodating regions 112 are collectively formed. Specifically, in step B6, the region that is closer to the radial-direction outer side of the magnet-accommodating region 112 than the first-removal region 112b is formed as the second-removal region 112c.

In step B6, the second-removal region 112c is formed such that the second-removal region 112c partially overlaps the first-removal region 112b. In other words, punching is performed on the plate to be processed W such that the part through which the punch passes during the punching in the first-removal region 112b in step B2 or step B3 and the part through which the punch passes during the punching in the second-removal region 112c in step B6 overlap each other. As illustrated in FIG. 9, the second-removal region 112c is formed such that a radial-direction inner end portion 112y of the second-removal region 112c is closer to the radial-direction inner side than a radial-direction outer end portion 112x of the first-removal region 112b. As a result, the first-removal region 112b and the second-removal region 112c have an overlapping region 112z in which the regions overlap each other.

In addition, in step B6, punching is performed on the region of the main body part 113 simultaneously with the formation of the second-removal region 112c (refer to the two-dot chain line in FIG. 8). As a result, the processed body PB having the annular portion 111, the magnet-accommodating region 112, and the main body part 113 is obtained.

Subsequently, the laminated core R is obtained by a predetermined number of the processed bodies PB obtained through step B1 to step B6 above (refer to FIG. 2) being superimposed and fastened by caulking (step (C)).

The action and effect of the above method for manufacturing a laminated core will be described below.

The method for manufacturing the laminated core R according to the present embodiment includes (A) the step in which the plate to be processed W is supplied to the progressive die 140, (B) the step in which the processed body PB having the annular portion 111, the plurality of magnet-accommodating regions 112 aligned at predetermined intervals in the circumferential direction at the periphery of the annular portion 111, and the main body part 113 serving as the magnetic flux passage between the plurality of magnet-accommodating regions 112 is obtained by punching in the plate to be processed W by means of the progressive die 140, and (C) the step in which the laminated core R is obtained by the plurality of processed bodies PB being stacked and fastened, and step (B) includes (b-1) the step in which the first-removal region 112b formed in advance is formed in the magnet-accommodating region 112 and (b-2) the step in which the second-removal region 112c formed continuous to the first-removal region 112b is formed in the magnet-accommodating region 112 after the (b-1) step.

By the method for manufacturing a laminated core, the second-removal region 112c is formed after the first-removal region 112b is formed during the formation of the plurality of magnet-accommodating regions 112 by punching. In other words, the magnet-accommodating regions 112 are formed through a plurality of divided steps. As a result, the punching load that is applied to the plate to be processed W during the formation of the magnet-accommodating regions 112 is reduced in comparison to a case where magnet-accommodating regions are collectively formed. Accordingly, the residual stress of the processed body PB obtained after punching can be reduced and deformation of the laminated core R in which the processed body PB is laminated can be suppressed.

In step (b-2), the second-removal region 112c is formed such that the second-removal region 112c partially overlaps the first-removal region 112b. In a case where the punching accuracy of the progressive die 140 is reduced due to a decline in the supply position accuracy of the plate to be processed W with respect to the progressive die 140 and a decline in the assembly accuracy of the progressive die 140, the first-removal region 112b and the second-removal region 112c do not form continuous punching regions, and then burr generation and incomplete cutting may pose a problem. The first-removal region 112b and the second-removal region 112c partially overlap each other in this regard, and thus the first-removal region 112b and the second-removal region 112c are likely to form continuous regions and burr generation and so on can be suppressed even in a case where the punching accuracy is reduced.

The region of the magnet-accommodating region 112 on the radial-direction inner side that is continuous to the annular portion 111 is formed as the first-removal region 112b in step (b-1), and the region closer to the radial-direction outer side of the magnet-accommodating region 112 than the first-removal region 112b is formed as the second-removal region 112c in step (b-2). As a result, the processed body PB having the annular portion 111, the magnet-accommodating region 112, and the main body part 113 described above can be continuously obtained by punching using the progressive die 140.

The connecting part 115 extending from the annular portion 111 toward the main body part 113 and narrower in circumferential-direction width than the main body part 113 is formed in step (B), step (B) further includes (b-0) the step in which the preliminary-removal region 112a, which is the peripheral region of the region becoming the connecting part 115, is formed in the magnet-accommodating region 112 prior to the first-removal region 112b, and the first-removal region 112b including the preliminary-removal region 112a is formed in step (b-1). In the processed body PB, the connecting part 115 narrow in circumferential-direction width is formed from the annular portion 111 toward the main body part 113. The small-region part is weak in strength, and thus is likely to be deformed by the residual stress based on the punching load. In this regard, the preliminary-removal region 112a, which is the peripheral region of the region becoming the connecting part 115, is formed before the formation of the first-removal region 112b including the preliminary-removal region 112a, and thus the punching region in the vicinity of the region becoming the connecting part 115 can become small (that is, the punching load can be reduced). As a result, the residual stress remaining in the connecting part 115 is reduced and deformation of the connecting part 115, which is weak in strength, can be suppressed.

In step (b-1), the first-removal region 112b is formed such that the preliminary-removal regions 112a are included inside the first-removal region 112b without exception. By the preliminary-removal regions 112a being completely included in the first-removal region 112b, the first-removal region 112b and the second-removal region 112c not forming continuous punching regions can be further reliably avoided. As a result, burr generation and so on can be effectively suppressed.

The preliminary-removal regions 112a of the plurality of magnet-accommodating regions 112 are collectively formed in step (b-0), the first-removal regions 112b of the plurality of magnet-accommodating regions 112 are formed through a plurality of divided occasions in step (b-1), and the second-removal regions 112c of the plurality of magnet-accommodating regions 112 are collectively formed in step (b-2). Preferably, the formation of the magnet-accommodating region 112 by punching is performed through as few steps as possible in view of work efficiency. Still, in a case where the punching region is large and the region in the vicinity of the punching place is small, the burden on the progressive die 140 during punching increases, and thus the number of punching steps needs to be reduced in view of the burden on the progressive die 140. In this regard, by the above method for manufacturing, the first-removal region 112b including the preliminary-removal region 112a close to the connecting part 115, that is, the region larger in punching region than the preliminary-removal region 112a and close to the small-region connecting part 115 is formed through a plurality of divided occasions while the preliminary-removal region 112a and the second-removal region 112c are collectively formed. As a result, the step in which an increase in the burden on the progressive die 140 during punching is evident can be divided into a plurality of steps, and the burden on the progressive die 140 can be reduced and the number of steps relating to the formation of the magnet-accommodating region 112 can be kept to a minimum at the same time.

The present invention is not limited to the embodiment of the present disclosure that has been described above. For example, although the three steps in which the preliminary-removal region 112a is formed, the first-removal region 112b is formed, and the second-removal region 112c is formed are included in the step in which the magnet-accommodating region 112 is formed according to the above description, the present invention is not limited thereto. In other words, the step in which the magnet-accommodating region 112 is formed may include the two steps in which the first-removal region 112b is formed and the second-removal region 112c is formed and may not include the step in which the preliminary-removal region 112a is formed. Alternatively, the step in which the magnet-accommodating region 112 is formed may include a plurality of steps other than the steps in which the first-removal region 112b is formed and the second-removal region 112c is formed.

In addition, in step (b-1), the first-removal region 112b may be formed such that a notch is formed in a side 113c of the adjacent main body part 113 (more specifically, at the part corresponding in radial-direction position to the overlapping region 112z illustrated in FIG. 9) in the region of the first-removal region 112b overlapping the second-removal region 112c. By the notch being formed at the main body part 113, the region in which the first-removal region 112b and the second-removal region 112c overlap each other can be widened. As a result, the first-removal region 112b and the second-removal region 112c not forming continuous punching regions can be further reliably avoided and burr generation and so on can be more appropriately suppressed in a case where the punching accuracy is reduced.

In addition, the regions of the first-removal region 112b and the second-removal region 112c may not overlap each other. Furthermore, the second-removal region 112c may include the first-removal region 112b as a whole. Moreover, although the first-removal region 112b is a region on the radial-direction inner side and the second-removal region 112c is a region on the radial-direction outer side from the viewpoint of continuous punching by the progressive die 140 according to the above description, the present invention is not limited thereto, and the first-removal region 112b may be a region on the radial-direction outer side and the second-removal region 112c may be a region on the radial-direction inner side in contrast. Regarding the second-removal regions 112c continuous in the circumferential direction, the first-removal region and the second-removal region may also be alternately formed.

### Industrial Applicability

According to the present disclosure, deformation attributable to residual stress can be suppressed in a laminated core of a rotor that is a laminated body of processed bodies in which a plurality of magnet-accommodating regions is arranged.

### Reference Signs List

11 ... Cylindrical portion, 12 ... Magnet-accommodating space, 13 ... Main body portion, 13c ... Side surface, 15 ... Connecting portion, 111 ... Annular portion, 112 ... Magnet-accommodating region, 112a ... Preliminary-removal region, 112b ... First-removal region, 112c ... Second-removal region, 113 ... Main body part, 113c ... Side, 115 ... Connecting part, 140 ... Progressive die, PB ... Processed body, R ... Laminated core, W ... Plate to be processed.

## Claims

1. A method for manufacturing a laminated core, the method comprising:
(A) a step of supplying a plate to be processed to a die;
(B) a step of obtaining, by punching out the plate to be processed by means of a die, a processed body having an annular portion, a plurality of magnet-accommodating regions aligned at predetermined intervals in a circumferential direction at a periphery of the annular portion, and a main body part serving as a magnetic flux passage between the plurality of magnet-accommodating regions; and
(C) a step of obtaining laminated core by a plurality of the processed bodies being stacked and fastened,
wherein the (B) step includes
(b-1) a step of forming a first-removal region formed in advance in the magnet-accommodating region, and
(b-2) a step of forming a second-removal region formed continuous to the first-removal region in the magnet-accommodating region after the (b-1) step.

2. The method for manufacturing a laminated core according to claim 1,
wherein the second-removal region is formed in the (b-2) step such that the second-removal region partially overlaps the first-removal region.

3. The method for manufacturing a laminated core according to claim 2,
wherein the first-removal region is formed in the (b-1) step such that a notch is formed in a side of the adjacent main body part in a region of the first-removal region overlapping the second-removal region.

4. The method for manufacturing a laminated core according to any one of claims 1 to 3,
wherein a region of the magnet-accommodating region on a radial-direction inner side continuous to the annular portion is formed as the first-removal region in the (b-1) step, and
wherein a region closer to a radial-direction outer side of the magnet-accommodating region than the first-removal region is formed as the second-removal region in the (b-2) step.

5. The method for manufacturing a laminated core according to any one of claims 1 to 4,
wherein a connecting part extending from the annular portion toward the main body part and narrower in width in the circumferential direction than the main body part is formed in the (B) step,
wherein the (B) step further includes (b-0) a step in which a preliminary-removal region as a peripheral region of a region becoming the connecting part is formed in the magnet-accommodating region prior to the first-removal region, and
wherein the first-removal region including the preliminary-removal region is formed in the (b-1) step.

6. The method for manufacturing a laminated core according to claim 5,
wherein the first-removal region is formed in the (b-1) step such that the preliminary-removal region is included inside the first-removal region without exception.

7. The method for manufacturing a laminated core according to claim 5 or 6,
wherein the preliminary-removal regions of the plurality of magnet-accommodating regions are collectively formed in the (b-0) step,
wherein the first-removal regions of the plurality of magnet-accommodating regions are formed through a plurality of divided occasions in the (b-1) step, and
wherein the second-removal regions of the plurality of magnet-accommodating regions are collectively formed in the (b-2) step.
